Europäisches Patentamt

(19) European Patent Office

Office européen des brevets

(11) Publication number: **0 013 301**

**B1**

## (12) EUROPEAN PATENT SPECIFICATION

(45) Date of publication of patent specification: **30.06.82**

(21) Application number: **79104179.1**

(22) Date of filing: **29.10.79**

(51) Int. Cl.³: **G 06 F 15/16,** G 06 F 9/46, G 06 F 13/00

(54) Multiprocessor system with enqueue facility for access to sharable data facilities.

(30) Priority: **04.12.78 US 965810**

(43) Date of publication of application:
**23.07.80 Bulletin 80/15**

(45) Publication of the grant of the patent:
**30.06.82 Bulletin 82/26**

(84) Designated Contracting States:
**DE FR GB**

(56) References cited:
DE - A - 2 534 141
DE - A - 2 801 563
GB - A - 1 452 843
US - A - 3 400 372
US - A - 3 825 902
US - A - 3 864 670
US - A - 3 964 054
US - A - 3 970 993
US - A - 4 009 470
US - A - 4 096 572

(73) Proprietor: **International Business Machines Corporation**
**Armonk, N.Y. 10504 (US)**

(72) Inventor: **Behman, Stephen Barry**
**20581 Ashley Way**
**Saratoga, California 95070 (US)**
Inventor: **Obermarck, Ronald Lester**
**24501, Summerhill Avenue**
**Los Alton, California 94022 (US)**
Inventor: **Trivett, Gene Edward**
**540 Wayside Road**
**Portola Valley, California 94025 (US)**
Inventor: **Watts, Vern Lee**
**101 Campanula Place**
**San Jose, California 95124 (US)**

(74) Representative: **Grant, Iain Murray**
**IBM United Kingdom Patent Operations Hursley Park**
**Winchester Hants, SO21 2JN (GB)**

Courier Press, Leamington Spa, England.

(56) References cited:
OFFICIAL GAZETTE OF THE UNITED STATES
PATENT AND TRADEMARK OFFICE, vol. 942,
No. 3, January 20th, 1976, Washington, D.C.
ABSTRACT FROM THE GRANTED ELECTRICAL
PATENT No. 3 934 232, "Interprocessor
Communication Apparatus for a Data
Processing System", page 1521.

Multiprocessor system with enqueue facility for access to sharable data facilities

The present invention relates to a multiprocessor system with enqueue facility for access to sharable data facilities.

When multiple processors are coupled into a data processing system, the problem of inherent competition for system resources must be accommodated. The work involved time taken and the equipment used constitutes a system overhead. In other words, it is a necessary waste and should be minimized. In a master/slave system, conflicts are preresolved by the master, but, in peer systems, this solution is not available and unloaded coupling between the processors is required.

It is known in the prior art to use channel-to-channel adapters to facilitate so-called peer coupling among CPU's. The differences between the various solutions in the prior art reside in the communications protocol, the functions being served and the design of the adapter.

One patent disclosing an apparatus which could be usable in a system of this type in U.S. patent 3,400,372 to Beausoleil, assigned to the common assignee. This patent discloses a channel-to-channel adapter which also attaches a terminal. This permits the terminal to communicate with either channel. However, this channel-to-channel adapter does not facilitate peer coupling among shared resources.

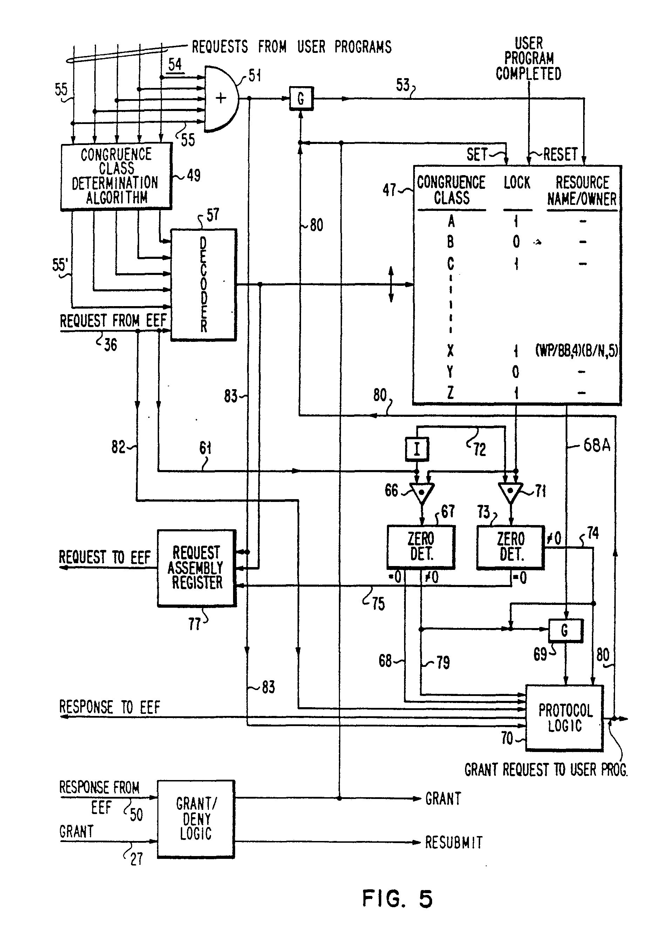

U.S. patent 3,934,232 to Curley, shows an adapter (205) coupling CPU subsystem (100) to an I/O subsystem (200). This patent is provided in part to facilitate the transfer of information in an inter-processor exchange. A latch mechanism seen in Figure 5 of the patent is shown for resolving access conflicts to sharable data resources. This is an enforcement mechanism. Whichever processor sets the latch first excludes the others.

Should the owner fail prior to resetting of the latch, the resource is unavailable to all other potential owners until the failed owner is repaired or some other external interference is effected. In general, therefore, enforcement mechanisms, of which such latch setting is one example, are thought to be undesirable.

The present invention is thought to provide a solution to these various conflicting problems, especially to avoid enforcement mechanisms.

The present invention provides a multiprocessor system with enqueue facility for access to sharable data facilities said system including a plurality of peer processors coupled into a common data processing system and in competition, from time to time in operation, for ownership of system resources, the apparatus being characterized in that: (a) each processor is equipped to perform resource ownership resolution in relation to submitted resource requests for resources owned by that processor, the resource resolution enqueuing protocol being the same for each processor; (b) a mapping and communicating unit is coupled to each processor in the same logical, if not physical, relationship; such coupling including provision for requesting ownership of an identified system resource; (c) the mapping and communicating unit includes mapping means to maintain a system resource ownership map of system resources and communicating means, responsive to a processor request for a system resource ownership, to transmit such request to all processors indicated as owners of that resource in the map; (d) each processor is arranged to provide a private ownership resolution message in response to a received such request; (e) a massage assembler being provided to assemble a composite resolution message for the requesting processor from all the resolution message from the receiving processors, the ownership of that resource and the map being adjusted, if appropriate, in response to the composite resolution message.

Such an arrangement performs the required function, avoids any master/slave relationships, in not an enforcement mechanism and enables decisions to be made at that point at which maximum precision is possible. The mechanism proposed is a notifier and not an enforcer.

The present invention will be described further by way of example with reference to an embodiment thereof (and various modifications which can be made thereto) as illustrated in the accompanying drawings in which:—

FIG. 1 is a diagrammatic illustration of a multiprocessor system wherein data resources can be shared between the CPU's within the system;

FIG. 2 in a representation of one form of resource class structure which can be accommodated with advantage by the apparatus of the invention;

FIG. 3 is a representation of the general aspects of conflict resolution within the apparatus;

FIG. 4 is a diagram of the EEF apparatus of Fig. 1;

FIG. 5 is a diagram of a typical IEF; and

FIG. 6 is a logic diagram of the grant/deny logic of the IEF of Fig. 5.

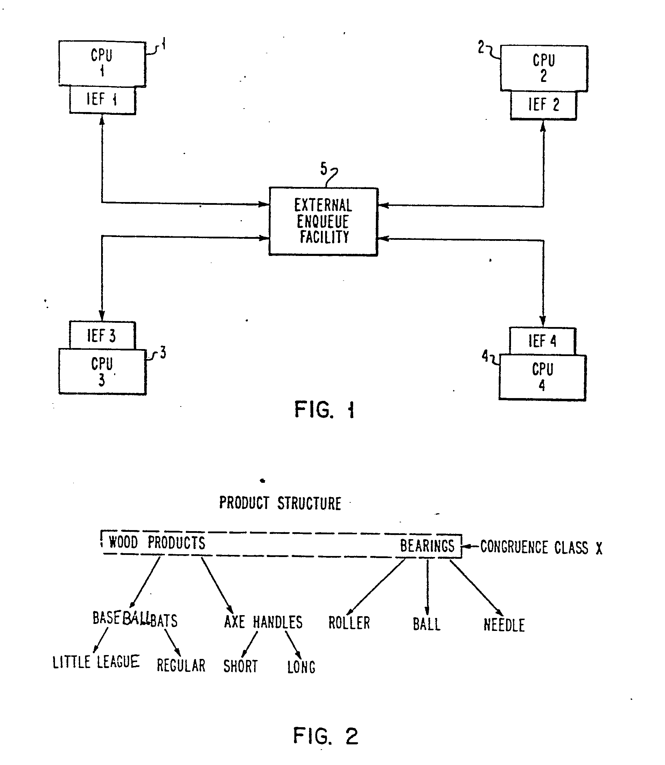

In the system of Fig. 1, four CPU's, 1, 2, 3, 4 are shown. Each peer CPU has an internal enqueue facility (IEF) or private ownership resolution mechanism designated IEF1, IEF2, IEF3, and IEF4, respectively. An IEF is hardware and/or programming internal to a CPU. The users of an IEF are the internal programs of the CPU with which the IEF is associated. One function of the IEF is to accept requests from its user programs for access to a resource and to grant or undertake the action necessary to allow it to grant access to that resource. Each CPU is further connected to an external enqueue facility (EEF) which is a mapping and communicating unit through that CPU's IEF. Thus the IEF's, with their programming and hardware which executes and provides data and control, can communicate one with the other through the EEF.

The EEF, as will be seen subsequently in greater detail, is a resource sharing facilitator in that it facilitates access to a resource desired by one or more of the sharing IEF's for one or more of its user programs. As mentioned above, there will be a resource sharing protocol for use within the system of the invention. The EEF is a *facilitator* of the resource sharing protocol, but is *not* an *executor* of this protocol. It provides the tool which can be used to implement a large family of sharing protocols. Usually, the sharing protocol decided upon, which its attendant rules, will be programmed into each CPU in the system.

Generally, the EEF operates upon a hierarchical resource structure, although it is conceivable that there could be enough resources defined so that hierarchical structures need not be imposed. Fundamentally, the EEF provides the possibility of managing resources in such a way that:

1) Intersystem communication occurs only when there is a real conflict for a resource, real or virtual (a resource class); and

2) When a conflict occurs, only those owners of the resource which are partly to the specific conflict are involved in a communication for the resolution of the conflict.

In an alternative embodiment the EEF function could (if it were deemed desirable) be performed by a central processing unit, independent of whether or not that central processing unit were also an "owner" of the resource. The only constraint is that the CPU which performs the EEF function under such an alternative embodiment be in communication with all other CPU's which are party to the sharing protocol in the same logical manner as it communicates with itself for the solution purposes.

A resource can be any appropriately defined entity within the system. Often, it will be a data record or perhaps be more narrowly defined as a field within a data record, access to which is desired by one CPU while access to which may be controlled by another CPU within the system. When a resource is requested by a using program, it is translated by a resource class determination algorithm of the sharing protocol by the associated IEF into a resource class, which can be termed a Congruence Class, and, if not already "owned" or "locked" by that IEF, the resource class is requested by that IEF from the EEF. Within the system, each IEF has the same congruence class determination algorithm. It is to be understood that a resource class can contain one or more objects which may not be related by anything external to the congruence class algorithm. One example of such an algorithm can be an appropriate hashing algorithm with which the literature is replete. Alternatively, congruence classes could be determined from internal structure of the members of the class without use of a hashing algorithm.

*Congruence Class*

An example of a resource class or a congruence class (which terms will be used interchangeably herein) can be seen with respect to FIG. 2. It can be assumed that data records for this example relate to product structure. For example, one record within a storage system may cover information having to do with wood products, while another has to do with bearings. Wood products can further be broken down into little league baseball bats or regular baseball bats. Wood products could also be short axe handles or long axe handles. Bearings, on the other hand, can be roller bearings, ball bearings, or needle bearings. The congruence class determination algorithm may, and usually will, associate more than one resource with a congruence class. For example, as seen in FIG. 2, wood products and bearings are associated with the same congruence class, namely congruence class X, in this case. That is, congruence class X could mean both wood products and also bearings. The fundamental desired property of a congruence class determination algorithm is that it be consistent to all parties to the sharing protocol; any form of an algorithm is appropriate, however, it should produce a "level" distribution. That is to say, it should be such that the actual usage of any congruence class by, say, percentage of time such congruence class is used, is about the same as for all the others. such algorithms are well known in the art and do not form an essential part of this invention.

*General Operation*

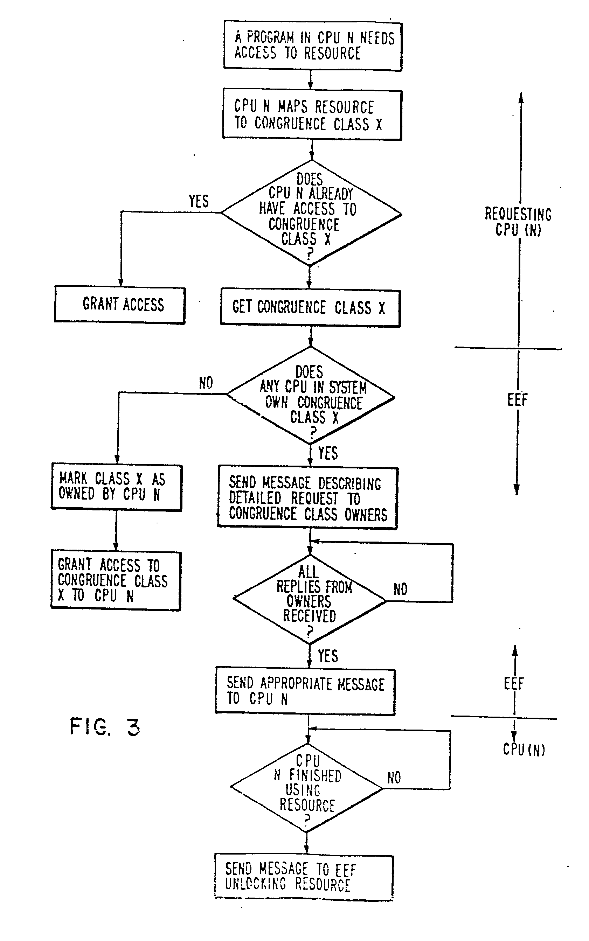

A broad example of operation of the EEF can be seen with respect to the flow chart of FIG. 3. In that figure, it is assumed that CPU N needs a particular resource for use by one of its programs. CPU N itself, using its internal congruence class determination algorithm, (which, as previously mentioned, is the same as that used by all CPU's of the system) maps the resource into a congruence class X. If the CPU does not itself currently "own" congruence class X, it sends a massage to the EEF requesting access to congruence class X. The EEF then determines whether or not any system owns congruence class X. If no system owns it, it marks congruence class X as being owned by CPU N and grants access to CPU N. On the other hand, if one or more CPU's other than CPU N within the system does own congruence class X, then the EEF, which has a table of owner CPU's, sends the request only to those owners and awaits replies from the owners as to whether or not access can be granted. When all messages are received from the owners, the EEF then sends an appropriate message to CPU N. This appropriate message may be that full access to Class X can be granted to the requesting CPU. It may be that access cannot be granted. It may also be that the owning CPU will allow CPU N access to a part of congruence class X, but not to the entirety of the class, as will be explained in greater detail subsequently. The requesting CPU will act on the response according to the locking protocol. Alternatively, the holders of the congruence class may send their individual responses to the request directly to the requesting CPU which can itself assemble the responses and proceed according to the protocol which will include supplying a suitable message to the EEF indicating the result so that a true ownership account can be maintained. When the requesting CPU no longer has need of the resource, it "unlocks" the resource by sending a message to the EEF so that it can be used by other CPU's with no, or with minimal, communication traffic through the EEF.

*External Enqueue Facility*

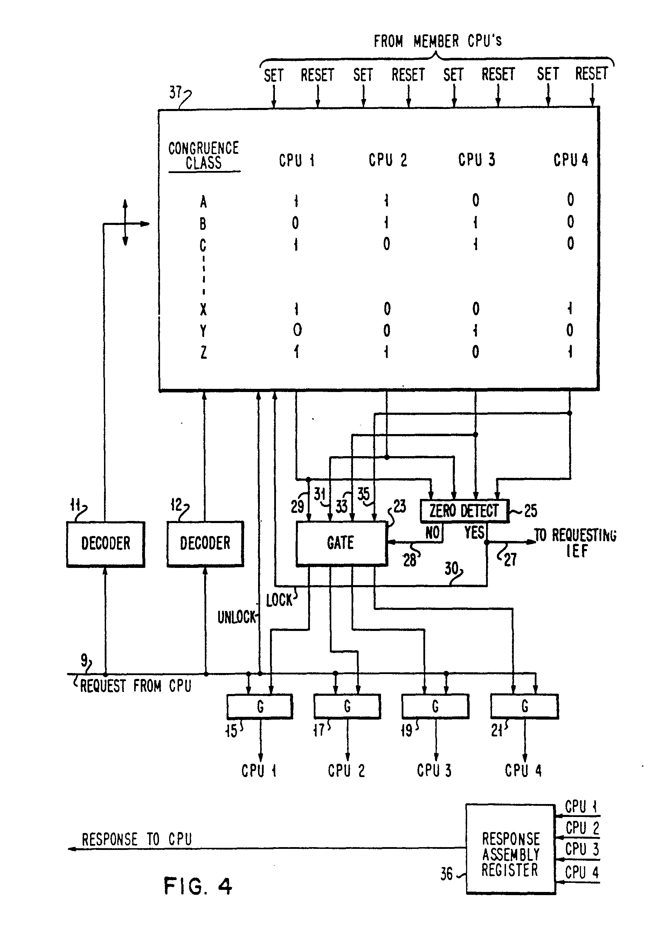

As seen in Figure 4, the EEF includes a resource table 37 or mapping means showing which CPU's in the system claim ownership of given congruence classes. For example, congruence class A is concurrently owned or locked at some level by CPU 1 and CPU 2, congruence class B is concurrently owned by CPU 2 and CPU 3, and so on. The lock column of each CPU is connected to zero detector 25 and likewise to gate 23. Bus 9, which transmits the request for access from a requesting CPU within the system to the EEF is connected to decoder 11, which decodes to the address of the given congruence class requested. The request on bus 9 can also include the identity of address of the requesting CPU. Bus 9 is also connected individually to steering gates 15, 17, 19 and 21, to which are also connected the outputs of gate 23. The lock columns can be set and reset, through appropriate decoding, by signals from the member CPU's of the system. When a given row of table 37 is accessed, it is read out of the table and appears as inputs to gate 23 and to zero detector 25. If the row which is read out for a given congruence class, say congruence class B, is all zeros, this indicates no CPU owns that congruence class. Thus, line 27 of zero detector 25 would be activated. This can be sent directly to the requesting IEF as an indication that it can lock congruence class B. The CPU address in the original message to the EEF can be used to steer this signal to the requesting IEF in a manner well known to those of ordinary skill in the art. Also, this same address can be used via decoder 12 to steer line 30 to the appropriate CPU column in the currently addressed line of Table 37 to enable line 30 to mark or lock the resource as owned by the requesting CPU.

If the row which is read out for a given congruence class (say, again, congruence class B) is not all zeros, this indicates one or more CPU's owns that congruence class. Thus, line 28 of zero detector 25 would be activated to gate the contents of row B from Table 37 to steering gates 15, 17, 19 and 21. These steering gates gate the request from the requesting IEF to the particular CPU's claiming ownership of congruence class B. In this example, the request would be gated to CPU 2 and CPU 3. The IEF's of these CPU's would act on the request in a manner to be described subsequently. A response to the request will be structured by each owning IEF and will be sent back to the Message Assembly Register 36. The contents of this register will be sent to the requesting IEF and will be interpreted by it as either a grant or denial of access to the requested resource.

*Internal Enqueue Facility*

One function of the IEF is to indicate which resources are owned by the IEF so that it can respond to requests for access to resources from the EEF. Another function of the IEF is to respond to requests for resources from its *own* user programs. Thus, to the user programs of its CPU, the IEF functions as an EEF. An example of an IEF usable in each CPU of the system is seen in FIG. 5. IEF1 of CPU1 is illustrated therein and is seen to have its own resource Table 47. The entries in the lock column show that IEF1 has "locked", or has ownership of, congruence classes A, C, X and Z as had been entered in the table of the EEF of FIG. 4. Also seen in Table 47 is a Resource Name/Owner column. This column indicates the Resource Name under which a congruence class is being used by a user program, and the identity of that owner. For example, and using the illustration of FIG. 2, user program 4 of CPU1 may be using a resource having to do with baseball bats. Thus, the resource name would be Wood Products. Baseball Bats. This would be translated or hashed by the congruence class determination algorithm 49 of FIG 5 which algorithm is associated with IEF 1 into congruence class. Thus, the entry for the Resource Name/Owner column for congruence class X would be (WP/BB, 4). This column could be viewed as wide enough to hold several entries. For example, if user program 5 were using a resource having to do with needle bearings, the resource name would be Bearings. Needle. This, again, would be hashed to congruence class X. Hence, the entries Resource Name-Owner for congruence class X would now be (WP/BB, 4) and (B/N, 5) and would indicate that congruence class X, which is locked, is being used by user program 4, which is using the Baseball Bat subset of Wood Products and is also being used by user program 5, which is using the Needle Bearing subset of Bearings. The mechanism for marking both the resource name which was mapped by the congruence class determination algorithm into the congruence class X and the owner of that resource can also be seen in FIG. 5. A request from a user program is transmitted over one of the buses, shown generally at 54, which enter congruence class determination algorithm 49. These buses are also connected to OR gate facility 51, the output bus 53 of which is connected to the latches comprising the Resource Name/Owner area of resource Table 47. Assume Wood Products. Baseball Bats is transmitted over bus 55 as a request for access from user program 4. This resource is mapped into congruence class X according to our example. The identification code for congruence class X is passed over bus 55 to decoder 57 where it is decoded to the address of Table 47 reserved for congruence class X. With proper delay to allow settling time for algorithm 49 and decoder 57, the code for (WP/BB, 4) can also be set via bus 53 into the Resource Name/Owner column of Table 47 at the decoded address for congruence class X.

*Request from EEF*

Also seen in FIG. 5 is bus 36 which transmits the request from the EEF of FIG. 4 to the IEF. The request, as mentioned previously contains the congruence class requested, the resource name desired, and the address of the requesting IEF. Bus 36 is connected to decoder 57. Since the requesting CPU already hashed the desired resource to a congruence class, there is no need to go through the congruence class determination algorithm. Therefore, bus 36 is connected directly to decoder 57 for the same purpose the outputs of the congruence class determination algorithm are so connected. Bus 82 is connected from Bus 36 to Protocol Logic 70 to transmit the desired resource name for subsequent use by the Protocol Logic 70. Bus 36 could also include a line 61 which would be activated when the request is active. Line 61 is connected to AND 66, the other input of which is from the Lock column of the row addressed by the output of decoder 57. The output of AND 66 is connected to zero detector 67. AND 66 is also connected through an inverter to AND 71. The other input of AND 71 is also from the Lock column. The output of AND 71 is connected to zero detector 73.

Since the request is from the EEF, it appears on bus 36 and the output of decoder 57 addresses to the desired row. Line 61 is active at this time since this is an external request. Line 61 conditions AND 66 and the lock bit of the addressed row is driven through AND 66 to zero detector 67. If the lock bit is zero, it indicates that the requested congruence class is not locked by this IEF. Line 68 will therefore condition protocol logic 70 to send a response to the EEF indicating the request can be granted insofar as this IEF is concerned. If the lock bit is a 1, it means that this IEF has locked the requested congruence class. Line 68A will condition gate 69 to gate the resource name indicating the subset of the requested congruence class which is locked by this IEF. If the protocol allows, protocol logic 70 will send a response to the EEF indicating whether access to any of the requested congruence class (i.e., a non-locked resource name) can be granted, insofar as this IEF is concerned. The manner in which this can be performed is discussed subsequently.

*Request from User Program*

In general operation, and assuming the appropriate timing, if the decoder 57 is decoding a request for access to a resource from a user program, line 61 will be inactive. After congruence class determination algorithm 49 has hashed the request from the user program to a congruence class, decoder 57 will address the row containing that congruence class. Since line 61 is inactive, (this being a user program request and not an EEF request), line 72 will be active and the lock bit for the addressed line will be driven through AND 71 to zero detect 73.

If this bit is zero, then the request congruence class is unowned by this IEF and a request, the form of which is discussed in detail subsequently, but which includes the IEF identity and the requested congruence class and resource name, is assembled in Request Assembly Register 77 and sent to the EEF to determine if this IEF can lock the congruence class at some level for the requesting user program.

If the lock bit is 1, the not-zero output of zero detector 73 activates line 74. This means the requested congruence class is owned by this IEF. Since the request is by an internal user program, the request can be granted to the user program through protocol logic 70 over line 80. The protocols capable of use are discussed subsequently. If line 80 is activated, it will grant the request.

*Response To IEF From EEF*

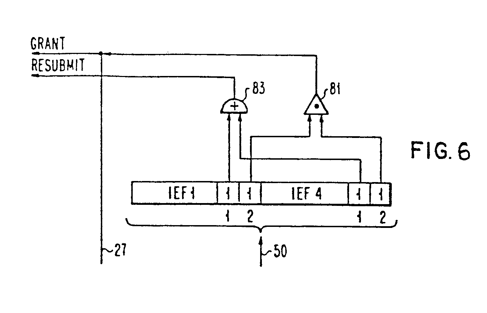

If the IEF has sent a request to the EEF via Request Assembly Register 77 as decribed in the previous section, a response will ultimately be assembled by the EEF's Response Assembly Register 36 of FIG. 4. The response will be sent to the requesting IEF via bus 50, using the address of the IEF which can be contained in the response. The response will proceed over bus 50 to the Grant/Deny logic of FIG. 5 where it is interpreted. An example of such logic can be seen in FIG. 6 where logic for two responses is shown, one from IEF1 and one from IEF 4. This can be expanded to any number of responses. In FIG. 6 position 1 indicates access to the congruence class cannot be granted at any level of control by the responding IEF. Position 2 indicates the request is fully granted by the responding IEF. Therefore, each position 2 of the response is connected to AND 81. If each response grants full access, the GRANT line will be activated to grant the request and lock congruence class X in table 47. Each position 1 is connected to OR 83. If either responding IEF cannot grant access at any level of control, the RESUBMIT line is activated to the user program which can then resubmit its request at a later time.

*Detailed Operation*

An example of detailed operation of the embodiment will now be given with reference to the drawing.

Assume CPU1 has been using the "Needle Bearings" resource for, say, updating purposes. In so doing, CPU's internal algorithm in its IEF similar to FIG. 5 has hashed "needle bearings" to Class X in accordance with our example of FIG. 2 and has ownership over (i.e., has "locked") Class X with the EEF by setting the 1 in the CPU1 column of the congruence class X now of table 37 of FIG. 4. If CPU2 now wishes to access "Little League Baseball Bats," for example, it must obtain its own lock for that resource. CPU2's IEF of FIG. 5 hashes "Wood Products" to Class X, since, for our example of FIG. 2, the algorithm 49 hashes both "Wood Products," and "Bearings" to Class X. Assuming the lock bit is zero for congruence class X of the table 47 of IEF2, then IEF2 structures in its Request Assembly Register 77 a two part access request to the EEF of the form:

Lock X, IEF2, Wood Products . Baseball Bats . Little League

The underscored portion is an imperative and tells the EEF that if there is no ownership in the EEF's table 376 for Class X, then CPU2 automatically gets ownership via line 27 of FIG. 4 with no additional communication traffic. The remainder of the request is informative, providing request information to other owning CPU's in the sysem if such is necessary.

In the example of FIG. 4, Class X is owned by CPU1 and CPU4. Thus, gate 23 passes a gating signal over lines 29 and 35 to gates 15 and 21, respectively to gate the above request to the IEF's of CPU1 and CPU4.

IEF1, for example will receive the request, determine from its informative portion that "Wood Products" is desired by CPU2. Since IEF1 is using "Bearings," its Protocol Logic will grant access to CPU2 by structuring in its Response Assembly Register a response to be transmitted to the EEF giving CPU2 full access to the subclass of Class X, which is Wood Products. The response may be of the form *Grant X, IEF2, IEF1,* Wood Products.

CPU1 is now *aware* that CPU2 may be a co-owner of Class X in that CPU2 is now granted access to the above subclass of Class X and may not yet have given up such access. CPU1 and CPU2 may agree by protocol, not forming a part of this invention, to retain any level of detail they wish of each other's usage of X. However, the more they desire to maintain, the greater the quantity of communication is required between them through the system. A protocol which is modular in depth, or constrained to a high level of particular depth is strongly suggested by the desire to limit communication.

*Fixed Depth Protocol*

If the protocol defines a level below which no inquiry for locked congruence classes will be made, a *fixed depth* protocol is established. For example, if the product class (i.e., Wood Products or Bearings as in FIG. 2) or any other agreed upon depth has been defined as the deepest level of memory (i.e., that depth chosen to be remembered as the level of sharing) then when a request is forwarded to each IEF, that IEF will not inquire below that fixed depth to determine if it can grant the request. For example, if the product class is defined as the fixed depth, then if a request from IEF2 such as *LOCK X, IEF2,* Wood Products . Axe Handles is received by IEF1, *and if* IEF1 is using Wood Products . Baseball Bats, a response denying the request will be sent to the EEF by IEF1 for transmission to IEF2, since IEF1 by agreement will not inquire below the product class (i.e., Wood Products) to determine if it is not using Wood Products . Axe Handles. IEF2 may continue asking for Wood Products . Axe Handles through the EEF until IEF1 is finished using Wood Products . Baseball Bats, or IEF2 may wait for IEF1 to notify it of IEF1's completion of use of Wood Products . Baseball Bats. A protocol, which is limited to a fixed depth, limits communication through the system but may not grant access to the requesting IEF when it could have, had it been agreed upon to inquire further.

*Modular Depth Protocol*

In a modular depth protocol, the controlling IEF agrees to inquire as deeply as is necessary to grant the incoming request for usage, if it can be granted at all. For example, if IEF2 requests *LOCK X, IEF2,* Wood Products . Axe Handles and IEF1 is currently using Wood Products . Baseball Bats . Little League, IEF1 will make the distinction that it is using the Little League Baseball Bat resource and will grant access to IEF2 for the Axe Handle resource.

An advantage of the modular depth protocol is that the holders of resources are free to use all resources of the last level of control which they held, or below. That is, when an IEF gives up a part of a resource, it need only give up a given level in the hierarchy.

An example of this can be seen with respect to FIG. 2. As previously stated, a given resource class such as X can contain more than one product class.

For example, Class X in FIG. 2 contains Wood Products and Bearings as two product classes.

Each product class can be even more finely divided as shown. Suppose IEF1 holds Class X and IEF2 requests access to the short axe handles resource as follows:

Lock X; IEF2; Wood Products . Axe Handles . Short.

In a modular protocol, if IEF1 is using the baseball bats resource of wood products, it may choose to grant IEF2's request for the short axe handle resource. In fact, if IEF1 determines, for example, that it is doing inventory on baseball bats and will have no need for axe handles, it may grant IEF2 access for *all* axe handles but retain the baseball bat resource of wood products. Thus IEF1 can pick the highest node in the hierarchical tree which it is not using, grant access at that node level (i.e., axe handles) but still freely grant immediate access to its user programs to all of Class X excpet Wood Products . Axe Handles.

## Consequences of Fixed Depth Protocol

The IEF has as its users the programs of that IEF's CPU. These programs obviously request access to resources. As to these user programs, the IEF acts as an EEF would act to the IEF. For example, if the IEF can grant immediate access to a resource to one of its user programs, it does so. If it cannot grant such access, it, in turn, must go to the EEF to obtain accesss.

If the system has adopted a fixed depth protocol then the IEF is free to give to its users immediate access to a request which is at or below the level of that fixed depth. For example, if IEF1 is using Wood Products . Baseball Bats . Little League, and IEF2 requests Wood Products . Axe Handles, the request of IEF2 is denied as described above. However, the consequence of this is that not IEF1 can grant to *its* users immediate access to Wood Products . Axe Handles (or, indeed, to any request for a resource within Wood Products) without reference to the EEF. Thus, at this point the IEF1 acts, as to its own user programs, as an EEF. The only restraint is that IEF1 of our example keep track internally of which resource it has granted to which of its users. Thus, as mentioned above, a fixed depth protocol limits communication through the system.

## Consequences of a Modular Protocol

A modular protocol will typically grant an IEF's request for access to a resource more often, but will grant it at a finer degree of granularity. For example, if IEF1 is using the Wood Products . Baseball Bats resource it cannot grant Wood Products (a course degree of granularity) to IEF2, but it can grant Wood Products. Axe Handles (a finer degree of granularity) to IEF2. Consequently, IEF2 can only grant immediate access to Wood Products . Axe Handles to *its* users and will have to go through the EEF for all other requests for wood product access from the user programs of IEF2. Thus, a modular protocol results in access granted more often to a requesting IEF, but more communication through the system by an IEF for requests by that IEF's user programs.

## Detailed Examples of Operation of IEF With Request From IEF's User Program

Assume user program 5 of IEF1 desires to use Needle Bearings. Assume further that initially the only entry in the Resource Name/Owner column for congruence class X is (WP/BB, 4). The request for access to the Needle Bearings resource will be placed on bus 55, for example, of FIG. 5 and be sent to concongruence class determination algorithm 49. The request will be hashed to congruence class X and the address corresponding to that congruence class row in table 47 is the output of algorithm 49 and is decoded by decoder 57. The lock column associated with congruence class X is read out. Since it is shown as a 1, zero detector 73 will detect the congruence class X is owned by the IEF and will condition gate 69 to gate the Resource Name/Owner column to protocol logic 70. Bus 53, which contains the request (B/N, 5) also transmits the request to protocol logic. Since the contents of the Resource Name/Owner column shows that the Wood Products . Baseball Bat subclass of congruence class X is being used by user program 4 (WP/BB, 4) but, according to our example, Needle Bearings is not in use, the protocol logic will grant user program 4 access to the Needle Bearings subclass of congruence class X, whether a fixed or modular protocol is used. Line 80 will grant the access and gate the identity of the request to the Resource Name/Owner column for use the next time a request is made. When the user program is completed it will, through appropriate decoding, activate the User program Completed line to remove (N/B,5) from the table and, if this is the last use of congruence class X, reset the Lock column.

If the Lock column has been zero, detector 73 would have activated line 75 indicating congruence class X is not locked by this IEF. Line 75 would gate the congruence class name and the resource name to the Request Assembly Register 77 to be sent as the request:

*Lock X, IEF1,* Bearings. Needles

to the EEF to request the resource as previously explained.

## Detailed Example of Operation of IEF With Request From The EEF

Assume IEF2 has a need for access to the resource associated with axe handles. Assume, further, for this example, FIG. 5 represents IEF1. As outlined in the paragraph immediately above, IEF2 will determine it does not own congruence class X. It will then structure a request

*Lock X, IEF2,* Wood Products. Axe handles.

This will be transmitted to the EEF. Referring to FIG. 4, the EEF, as previously explained, will determine that congruence class X is locked by IEF1 and IEF4. This example details the operation of IEF1. The operation of IEF4 is similar.

Referring to table 47 of FIG. 5, IEF1 owns congruence class X. The subclass of congruence class X being actually used are Wood Products. Baseball Bats by user program 4 (WP/BB,4) and Needle Bearings by user program 5 (B/N, 5). Wood Products. Axe Handles is *not* being used by IEF1. The request *Lock X, IEF2,* Wood Products. Axe Handles is sent via bus 36 to decoder 57 of FIG. 5. Row X is read out. AND 66 sends the 1 from the Lock column to zero detector 67. Since the 1 is activated, line 79 will gate the contents of the Resource Name/Owner column of row X to protocol logic 70 and also will indicate directly to protocol logic that congruence class X is locked. Protocol logic has gated to it the resource (Wood Products. Axe Handles) over bus 81 and, via gate 69, the fact that the IEF is only using Wood Products. Baseball Bats and Bearings. Needle, but *not* Wood Products. Axe Handles. If a fixed depth protocol is being used then, as explained previously, access will be denied. Using a modular protocol, the protocol logic will determine that although congruence class X is locked, IEF1 is not using Wood Products. Axe Handles and will grant that request by a response to the EEF of the form:

*Grant X, IEF2,* Wood Products. Axe Handles.

This will be assembled in the Response Assembly Register of FIG. 4 and transmitted to the grant/deny logic of IEF2 where it will be interpreted as a granting of the request for access to use the axe handle resource.

From this, it will be apparent that apparatus as claimed provides the basis for flexible and efficient ownership resolution within a peer mutliprocessor system.

## Claims

1. Multiprocessor system with enqueue facility for access to sharable data facilities said system including a plurality of peer processors (1, 2, 3, 4,) coupled into a common data processing system and in competition, from time to time in operation, for ownership of system resources, the apparatus being characterized in that:
(a) each processor is equipped to perform resource ownership resolution in relation to sbmitted resource requests for resources owned by that processor, the resource resolution engineering protocol being the same for each processor;
(b) a mapping and communicating unit (5) is coupled to each processor in the same logical, if not physical, relationship; such coupling including provision (bus 9) for requesting ownership of an identified system resource;
(c) the mapping and communicating unit includes mapping means (37) to maintain a system resource ownership map of system resources and communicating means (11 to 35), responsive to a processor request for a system resource ownership, to transmit such request to all processors indicated as owners of that resource in the map;
(d) each processor is arranged to provide a private ownership resolution message in response to a received such request;
(e) a message assembler (36) being provided to assemble a composite resolution message for the requesting processor from all the resolution messages from the receiving processors, the ownership of that resource and the map being adjusted, if appropriate, in response to the composite resolution message.

2. A system as claimed in claim 1 in which the message assembler is common to all the processors and forms part of the mapping and communicating unit, each processor being coupled to the mapping and communicating unit to signal release of ownership of identified system resources as is appropriate.

3. A system as claimed in claim 1 in which there is a message assembler in each processor and responding processors signal the requesting processor directly, the composite resolution message and release of ownership of identified system resources being signalled to the mapping and communicating unit as becomes appropriate.

4. A system as claimed in any preceding claim in which each processor includes a private ownership resolution mechanism (IEF) to resolve internal contention for already owned system resources and to transmit requests to the mapping and communicating unit (5) if the resource is not already owned, the communicating means including means (25, 27) to signal directly that there is no mapped ownership of a requested system resource.

5. A system as claimed in any preceding claim in which system resources are identifiable at the mapping and communicating unit by class and are resolvable at an owning processor individually within a class.

## Revendications

1. Système à processeurs multiples avec équipement d'attente pour l'accès à des équipements de données utilisables en commun, ledit système comprenant plusieurs processeurs d'importance égale (1, 2, 3, 4) connectés en un système commun de traitement de données et se trouvant en conflit de temps à autre, en cours de fonctionnement, pour obtenir l'accès accès aux ressources du système, caractérisé en ce que:

(a) chaque processeur est en mesure de résoudre les conflits qui peuvent se poser lors de la réception de demandes d'accès à ses propres ressources, le protocole d'attente étant le même pour chaque processeur,

(b) une unité d'organisation et de communication (5) est connectée à chaque processeur selon une relation logiquement, sinon physiquement, identique, des moyens (bus 9) étant prévus pour demander l'accès à une ressource identifiée,

(c) l'unité d'organisation et de communication comprend des moyens (37) permettant de maintenir une table des accès aux ressources du système, et des moyens de communication (11 à 35) permettant, en réponse à une demande d'accès à une ressource déterminée du système et émanant d'un processeur donné, de transmettre cette demande à tous les processeurs qui, selon ladite table, disposent de cette ressource,

(d) chaque processeur transmet, en réponse à une telle demande, un message de résolution des conflits internes,

(e) un assembleur de messages (36) permettant d'assembler un message de résolution composite à l'intention du processeur dont émane la demande, à partir de tous les messages de résolution reçus des processeurs auxquels la demande a été adressée, la table des accès aux ressources étant éventuellement mise à jour en réponse audit message.

2. Système selon la revendication 1, caractérisé en ce que l'assembleur de messages est commun à tous les processeurs et fait partie de l'unité d'organisation et de communication, chaque processeur étant connecté à cette dernière afin de signaler la disponibilité des ressources identifiées du système qui cessant d'être utilisées.

3. Système selon la revendication 1, caractérisé en ce que chaque processeur comporte un assembleur de messages et en ce que les processeurs qui répondent à la demande émanant d'un processeur donné communiquent directement avec ce dernier, l'unité d'organisation et de communication recevant le message de résolution composite et étant informée de façon appropriée de la disponibilité des ressources identifiées du système.

4. Système selon l'une quelconque des revendications précédentes, caractérisé en ce que chaque processeur comprend un dispositif dit IEF qui permet de résoudre les conflits internes dans le cas des ressources du système que le processeur possède déjà et de transmettre les demandes d'accès à l'unité d'organisation et de communication (5) dans le cas contraire, les moyens de communication comprenant des moyens (25, 27) permettant d'indiquer directement le fait que ladite table ne fait état d'aucune affectation d'une ressource désirée de système.

5. Système selon l'une quelconque des revendications précédentes, caractérisé en ce que les ressources du système sont identifiables par classe au niveau de l'unité d'organisation et de communication et que les conflits afférents à des demands l'accès aux ressources d'une même classe peuvent être résolus individuellement au niveau d'un processeur qui possède lesdites ressources.

**Patentansprüche**

1. Multiprozessorsystem mit Warteschlangen-Vorrichtungen für de Zugriff zu gemeinsam benutzbaren Datenvorrichtungen, mit mehreren gleichrangigen Prozessoren (1, 2, 3, 4) die in einem gemeinsamen Datenverarbeitungssystem miteinander verkoppelt sind und zeitweise miteinander um Betriebsmittel konkurrieren, dadurch gekennzeichnet, daß

(a) jeder Prozessor zum Ausüben von Entscheidungen zwecks Inanspruchahme von Betriebsmitteln in Verbindung mit Anforderungen nach Betriebsmitteln dieses Prozessors ausgelegt ist, daß das Warteschlangen-Protokoll der Betriebsmittel-Entscheidungen für jeden Prozessor dasselbe ist,

(b) eine Formatierungs- und Kommunikationseinheit (5), die nicht physikalisch mit jedem Prozessor verbunden ist, jedoch in deren Logik integriert ist, wobei diese logische Integration eine Vorrichtung (Sammelleitung 9) zur Inanspruchnahme von identifizierten Betriebsmitteln enthält,

(c) die Formatierungs- und Kommunikationseinheit Formatierungsschaltungen (37) enthält, mit deren Hilfe diejenigen Betriebs- und Kommunikationsmittel (11 bis 35) formatiert und angezeigt werden, die auf eine Prozessoranfrage nach der Inanspruchnahme von einem Betriebsmittel ansprechen, wodurch Anfragen an alle Prozessoren übertragen werden, die in der Aufzeichnung als Benutzer dieses Betriebsmittels aufgeführt sind;

(d) jeder Prozessor so angeordnet ist, daß er eine private Nachricht über eine Entscheidung auf eine solche Anforderung hin liefern kann,

(e) zur Zusammenstellung einer Sammelentscheidungsnachricht für den anfragenden Prozessor von allen Entscheidungsnachrichten der Empfangsprozessoren ein Nachrichten-Assembler (36) angeordnet ist wobei die Inanspruchnahme des Betriebsmittels und die Formatierung und Aufzeichnung gemäß der Sammelentscheidungs-Nachricht angeglichen werden.

2. Multiprozessorsystem nach Anspruch 1, dadurch gekennzeichnet, daß der Nachrichten-Assembler allen Prozessoren als Teil der Formatierungs- und Kommunikationseinheit gemeinsam zugeordnet ist, wobei jeder Prozessor an die Formatierungs- und Kommunikationseinheit angeschlossen ist, um die entsprechende Freigabe der Inanspruchnahme der identifizierten Systembetriebsmittel anzuzeigen.

3. Multiprozessorsystem nach Anspruch 1, dadurch gekennzeichnet, daß in jedem Prozessor ein Nachrichten-Assembler angeordnet ist und daß die ansprechenden Prozessoren dies dem anfragenden Prozessor direkt anzeigen, wobei die Sammelleitungsnachricht und die Freigabe der Inanspruchnahme der identifizierten Systembetriebsmittel gegebenenfalls der Formatierungs- und Kommunikationseinheit angezeigt werden.

4. Multiprozessorsystem nach einem der vorhergehenden Ansprüche, dadurch gekennzeichnet, daß jeder Prozessor eigene Mittel für die Inanspruchnahme-Entscheidungen (IEF) umfaßt, um für bereits in Anspruch genommene Betriebsmittel interne Konkurrenzsituationen zu beseitigen, und um Anforderungen an die Formatierungs- und Kommunikationseinheit (5) zu übertragen, wenn das Betriebsmittel nicht bereits in Anspruch genommen ist, wobei die Kommunikationsmittel Einrichtungen (25, 27) zur direkten Anzeige darüber enthalten, daß keine ausgezeichnete Inanspruchnahme eines angeforderten Systembetriebsmittels vorliegt.

5. Multiprozessorsystem nach einem der vorhergehenden Ansprüche, dadurch gekennzeichnet, daß die System-Betriebsmittel der Formatierungs- und Kommunikationseinheiten durch Klassen identifizierbar sind und in einem Inanspruchnahme-Prozessor innerhalb einer Klasse individuell lösbar sind.

FIG. 1

PRODUCT STRUCTURE

FIG. 2

0013 301

FIG. 3

FROM MEMBER CPU's

| SET | RESET | SET | RESET | SET | RESET | SET | RESET |

37

| CONGRUENCE CLASS | CPU 1 | CPU 2 | CPU 3 | CPU 4 |
|---|---|---|---|---|
| A | 1 | 1 | 0 | 0 |
| B | 0 | 1 | 1 | 0 |
| C | 1 | 0 | 1 | 0 |
| ... | | | | |
| X | 1 | 0 | 0 | 1 |
| Y | 0 | 0 | 1 | 0 |
| Z | 1 | 1 | 0 | 1 |

11

12

DECODER

DECODER

29  31  33  35  23

ZERO DETECT  ~25

GATE

NO  YES

28

30

27

TO REQUESTING IEF

LOCK

UNLOCK

9

REQUEST FROM CPU

| G | G | G | G |

15  17  19  21

CPU 1   CPU 2   CPU 3   CPU 4

RESPONSE TO CPU

RESPONSE ASSEMBLY REGISTER

36

CPU 1
CPU 2
CPU 3
CPU 4

FIG. 4

3

**0 0 13 301**

FIG. 5

GRANT

RESUBMIT

83

81

FIG. 6

IEF 1 | 1 | 1 | IEF 4 | 1 | 1

1    2         1    2

27

50